# EUROPEAN PATENT APPLICATION

(11) **EP 1 493 666 A1**
(43) Date of publication of application: **05.01.2005**
(21) Application number: 04015579.8
(22) Date of filing: 02.07.2004
(51) Int. Cl.: B64D 47/02, B60Q 3/00

(54) **Multi-layered arrangement of foil layers for supplying power to light emitting diodes in aircraft cabin lighting**

(30) Priority: 02.07.2003 DE 10329751
(71) Applicant: Airbus Deutschland GmbH, 21129 Hamburg (DE)
(72) Inventor: Kohlmeier-Beckmann, Carsten, 21614 Buxtehude (DE); Blechschmidt, Karl-Heinz, 21641 Apensen (DE)
(74) Representative: Klöpper, Ute, Dipl.-Ing.

(57) **Abstract**

A light system in an aircraft includes an electrical power source (4), individual light emitting diodes (2A,2B,2C) arranged in a cabin of the aircraft, and a multi_layered conductor arrangement (1) connecting the light emitting diodes to the power source. The multi_layered conductor arrangement includes electrically conductive foil layers (F1,F2,F3) separated from one another by respective interposed insulative layers (I1,I2), and may be disposed on a curved honeycomb ceiling panel of the aircraft cabin. The foil layers form conductive circuits connected to the power source through a switching arrangement (3) that selectively individually energizes the individual conductive circuits. The foil layers are differently patterned so that the diodes are each connected to and isolated from the respective pertinent layers. This avoids individual wiring and can provide different patterns, sequences, or lighting schemes of several independently controlled groups of diodes.

## Description

The invention relates to a system for supplying power to light emitting diodes, preferably arranged in or on the ceiling of an aircraft cabin, whereby the diodes are connected to a power supply unit.

German Patent Publication DE 198 43 330 A1 discloses a lighting arrangement for a vehicle, and particularly a cabin lighting arrangement for an aircraft cabin, in which plural individual point light sources comprising at least one light emitting diode (LED) are arranged in or on the ceiling of the aircraft cabin. The light sources are at least partially connected with one another in parallel or in series, and are further connected to a power supply unit of the aircraft. In this context, the circuit connection of the several light emitting diodes to each other and to the power supply unit is achieved by means of flexible electrically conductive cables. Furthermore, zener diodes are preferably connected in the blocking direction parallel to the light emitting diodes.

In order to allow the visual appearance of an aircraft cabin to be individually stylized or tailored, for example based on the particular desires of the airline operating the aircraft, it is becoming known to use many light emitting diodes for the illumination of the cabin. Due to the lighting characteristics of such light emitting diodes, they can easily and advantageously be integrated into various components of the cabin. For example, the cabin trim or paneling typically comprises lightweight curved panels of a honeycomb structure, and the point light sources comprising light emitting diodes should preferably be integrated into these trim panels in such a manner so that groups of the light emitting diodes form a pattern on the visible side of the trim panels.

Depending on the desired lighting effect, several independent conductive circuits will be necessary in order to separately and selectively power the various different groups of light emitting diodes independently of one another, for example by providing power at different times, or different dimming levels, or with different lighting features such as blinking, flashing or flickering. Moreover, to achieve the desired lighting effect and the desired pattern, it may be necessary to arrange approximately 100 light emitting diodes in a single ceiling trim panel. It is thus a significant disadvantage to require an individual discrete connection of each one of these many diodes by means of flexible electrically conductive cables to form the several required conductor circuits. Such individual wiring is complicated, labor intensive, relatively heavy and voluminous, and also quite expensive to carry out. Furthermore, the high number of individual conductive cables and individual connections leads to a high risk of defects during the fabrication and installation.

In view of the above, it is an object of the invention to provide a power distribution system that avoids the need of a discrete individual cable_connection for each of the individual light emitting diodes in an aircraft lighting system. A more particular object of the invention is to provide a simple, lightweight, economical, easy to fabricate, and flexibly or variably applicable conductor arrangement for selectively connecting groups of or individual light emitting diodes to a power source. The invention further aims to avoid or overcome the disadvantages of the prior art, and to achieve additional advantages, as apparent from the present specification. The attainment of these objects is, however, not a required limitation of the present invention.

The above objects have been achieved according to the invention in a light system in an aircraft including an electrical power source, individual lights arranged in an aircraft cabin, and a conductor arrangement electrically connecting the individual lights to the electrical power source. The invention especially provides an improvement in the light system wherein the individual lights comprise light emitting diodes arranged in the aircraft cabin, and preferably in or on the ceiling of the aircraft cabin. At least some of the light emitting diodes are electrically connected to each other in parallel and/or in series, and the light emitting diodes are connected to the electrical power source, by the conductor arrangement. The conductor arrangement comprises a multi_layered arrangement including electrically conductive foil layers separated from one another respectively by a respective interposed electrically insulative insulation layer. For example, if there are two foil layers, one insulation layer will be interposed therebetween, while a multi_layered arrangement including three stacked foil layers will have two insulation layers respectively between the first and second foil layers and the second and third foil layers.

Additional insulation layers may be provided as needed under the bottom foil layer and/or over the top foil layer.

The foil layers form at least one conductive circuit that is connected to the electrical power source. The number of foil layers and thus the number of conductive circuits is essentially unlimited. Namely, it is possible to provide additional foil layers stacked and separated from one another by respective insulation layers, in order to form the required number of distinct conductive circuits for achieving the desired lighting patterns and the like. Each conductive circuit can selectively power an individual diode or a group of diodes connected to that conductive circuit, independently of the other diodes connected to other conductive circuits.

At the respective individual installation locations of the individual light emitting diodes, the several conductive foil layers are embodied or configured, and particularly patterned, in such a manner so that each individual light emitting diode will be electrically connected via its diode terminals to the proper allocated conductive circuit. In other words, the several layers are patterned so that the diode terminals of a respective individual light emitting diode will contact the appropriate foil layer or layers to which the diode is to be connected, and will not contact the foil layer or layers to which the diode is not to be connected. Thus, with appropriate patterning of the stacked foil layers, the several light emitting diodes can simply be "plugged in" to the multi_layered arrangement at the appropriate locations, whereby each diode is connected to the appropriate foil layers while remaining isolated from the other foil layers to which it is not to be connected.

In this manner, the light emitting diodes can be arranged and connected in groups of diodes that are to be illuminated together, for example to form a selected pattern or to provide a selected color of illumination. Namely, the different groups of diodes can form different patterns or provide different colors of illumination, or the like. Moreover, an individual diode can be electrically connected to more than one of the conductive circuits, so that the respective individual diode will be illuminated with more than one group of the diodes. For example, a particular diode may play a role in more than one lighting pattern that is to be achieved. Such a connection of each individual diode as needed can be easily achieved by appropriately patterning the several conductive foil layers of the multi_layered conductor arrangement.

In order to control the illumination of each group of light emitting diodes respectively connected to a given conductive circuit, the conductive circuits (and thus the associated conductive foil layers) are connected through a switching arrangement to a power supply unit. The switching arrangement includes individual switches to selectively electrically connect or disconnect a respective foil layer relative to the power supply. The switching arrangement is controlled based on the desired illumination patterns, sequences, lighting effects, or the like, using any conventionally known switch control hardware, software, processes, etc., such as the conventional lighting system controller in the aircraft.

The lightweight, thin, multi_layer conductor arrangement can be easily installed at various locations and in various configurations as desired. For example, the multi_layered arrangement can easily be bent or curved to be applied onto a curved trim panel, such as a curved honeycomb panel acting as a substrate for the multi_layered arrangement and as a cabin ceiling trim panel. The multi_layered arrangement may even be applied surfacially over essentially the entire surface of a cabin ceiling panel, for example, if a lighting pattern of diodes is to be provided on essentially the entire ceiling panel.

Moreover, the multi_layered conductor arrangement including patterned conductive foil layers separated from one another by insulation layers avoids the need for individual electrical wires or cables for connecting the light emitting diodes to each other and to the power supply. The inventive solution is thus lightweight, simple, economical, and robust in comparison to conventional approaches.

### BRIEF DESCRIPTION OF THE DRAWINGS

In order that the invention may be clearly understood, it will now be described in connection with example embodiments, with reference to the accompanying drawings, wherein:
- Fig. 1: is a schematic sectional view of a multi_layered conductor arrangement according to the invention including stacked conductive foil layers and interposed insulation layers arranged on a curved honeycomb panel;
- Fig. 2: is a schematic sectional view of a multi_layered conductor arrangement connected through a switching arrangement to a power supply, wherein the foil layers are patterned to be selectively electrically connected to light emitting diodes;
- Fig. 3: is a schematic sectional view showing a parallel connection of two diodes via two foil layers;
- Fig. 4: is a schematic sectional view showing a series connection of two diodes via three foil layers; and
- Fig. 5: is a schematic sectional view of another embodiment of a series connection of two diodes via two foil layers.

### DETAILED DESCRIPTION OF PREFERRED EXAMPLE EMBODIMENTS AND OF THE BEST MODE OF THE INVENTION

The drawings are not to scale and are not in proportion. Instead, the drawings merely aim to schematically represent the general features or principles of the inventive arrangement, without realistically illustrating actual structures.

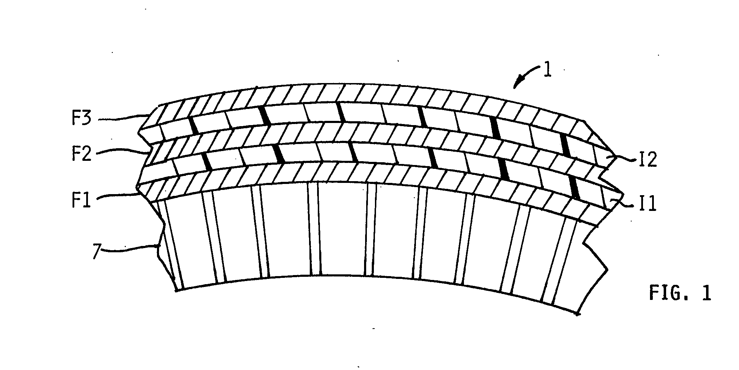

Fig. 1 schematically shows a multi_layered conductor arrangement 1 according to the invention, including three electrically conductive foil layers F1, F2 and F3 that are stacked relative to one another, with respective electrically insulative insulation layers I1 and I2 interposed between the foil layers. The multi_layered conductor arrangement 1 may be arranged and supported on a substrate, for example a honeycomb panel 7. This honeycomb panel 7 may, for example, be a ceiling or wall trim panel of an aircraft cabin. In this regard, the honeycomb panel 7 and the multi_layered conductor arrangement 1 arranged thereon can be curved as needed in one or more dimensions. Thereby, the multi_layered conductor arrangement 1 can be readily installed on essentially any trim surfaces within an aircraft cabin. In such an arrangement, a respective foil layer F1, F2 or F3 preferably has a maximum thickness of 3 mm. More preferably, the entire multi_layered arrangement 1 including plural foil layers F1, F2 and F3 as well as insulation layers I1 and I2 has a maximum total thickness of no more than 3 mm.

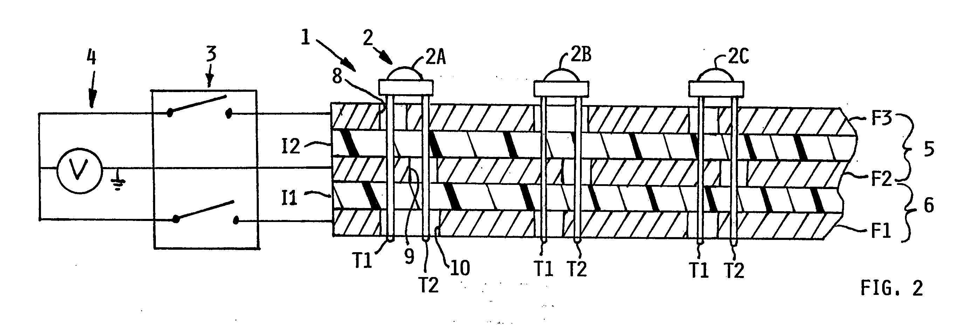

Fig. 2 schematically illustrates the multi_layered conductor arrangement 1 in an overall lighting system of an aircraft, for example for general illumination or special lighting effects in the aircraft cabin. The lighting system includes the multi_layered conductor arrangement 1, a switching arrangement 3 connecting the multi_layered conductor arrangement 1 to a power supply 4, and light emitting diodes 2 connected to the multi_layered conductor arrangement 1 to be supplied electrical power thereby.

In this example embodiment, the multi_layered conductor arrangement 1 includes three conductive foil layers F1, F2 and F3 separated from one another by respective interposed insulation layers I1 and I2. The middle foil layer F2 is connected to one terminal, e.g. a reference or ground terminal, of the power supply 4. On the other hand, the bottom and top foil layers F1 and F3 are each individually connected through switches of the switching arrangement 3 to the other terminal of the power supply 4. The switches of the switching arrangement 3 are controlled according to the desired lighting pattern, sequence or scheme, so as to selectively connect or disconnect the bottom foil layer F1 and the top foil layer F3 relative to the power supply 4. Thereby, the foil layers F2 and F3 together form a switched first conductive circuit 5, while the foil layers F1 and F2 together form a switched second conductive circuit 6. With such an arrangement, there can be two groups of light emitting diodes 2 that are independently supplied with power respectively through the first or second conductive circuits 5 or 6, so that thereby the two groups of diodes 2 will be independently and separately illuminated.

As an example, Fig. 2 shows a first light emitting diode 2A having two terminals T1 and T2, whereby the terminal T1 is electrically connected only to the middle foil layer F2 and the terminal T2 is connected only to the top foil layer F3. Neither of the terminals T1 or T2 of the first diode 2A is connected to the bottom foil layer F1. Thus, the first diode 2A is electrically connected to the first conductive circuit 5 and remains isolated from the second conductive circuit 6. This is achieved by suitably patterning the several foil layers F1, F2 and F3.

For example, at the intended installation location of the first light emitting diode 2A, the top foil layer F3 has a hole 8 around the intended insertion location of the first terminal T1 of the first diode 2A. The middle foil layer F2 similarly has a hole 9 around the intended insertion location of the second terminal T2 of the first diode 2A. The bottom foil layer F1 has a larger hole 10 around the intended insertion location of both terminals T1 and T2 of the diode 2A. On the other hand, the top foil layer F3 has a portion remaining at the intended insertion location of the terminal T2, while the middle foil layer F2 has a portion remaining at the intended insertion location of the terminal T1 of the diode 2A. Thereby, it is ensured that the first terminal T1 of the diode 2A is electrically connected only to the middle foil layer F2 while remaining isolated (by the holes 8 and 10) from the top foil layer F3 and the bottom foil layer F1. Similarly, the second terminal T2 of the diode 2A is electrically connected only to the top foil layer F3 while remaining isolated (by the holes 9 and 10) from the middle foil layer F2 and the bottom foil layer F1.

The mechanical and electrical connection of the diode 2A with the multi_layered conductor arrangement 1 may, for example, be carried out by a simple plug_in connection, e.g. by inserting the terminals T1 and T2 of the diode 2A into fitting contact holes provided in the foil layers F2 and F3, or by piercing the terminals T1 and T2 through the foil layers F2 and F3 at the intended installation location, or by fitting the terminals T1 and T2 into contact bushings or ferrules (not shown) previously inserted into the foil layers at the appropriate locations. Meanwhile, the isolation holes 8, 9 and 10 ensure that unintended electrical connections are not established. The other diodes may be connected to the conductor arrangement 1 similarly in any of these manners.

Further in Fig. 2, a second light emitting diode 2B is connected to the multi_layered conductor arrangement 1 in a generally similar manner as the first diode 2A, but with a different patterning of the foil layers F1, F2 and F3. Namely, by providing isolation holes in the foil layers at the appropriate locations, the first terminal T1 of the second diode 2B is electrically connected with the middle foil layer F2 while remaining isolated from the bottom and top foil layers F1 and F3. On the other hand, the second terminal T2 of the second diode 2B is electrically connected only to the bottom foil layer F1 while remaining isolated from the middle and top foil layers F2 and F3. Thus, the second diode 2B is connected to the second conductive circuit 6.

Finally, Fig. 2 also shows a third light emitting diode 2C that is connected to both conductive circuits 5 and 6. Namely, the first terminal T1 of this third diode 2C is connected only to the middle (e.g. ground) foil layer F2, while remaining isolated from the lower and upper foil layers F1 and F3, and the second terminal T2 is connected to both the bottom foil layer F1 and the top foil layer F3 while being isolated from the middle foil layer F2. Thereby, this third diode 2C will be supplied with power and illuminated whenever either one or both of the first and second conductive circuits 5 and 6 are connected through the switching arrangement 3 to the power supply 4. In this manner, the diode 2C can function as a member of two different diode groups, e.g. can form a pixel or point light source of two different patterns at different times or in an overlapping manner.

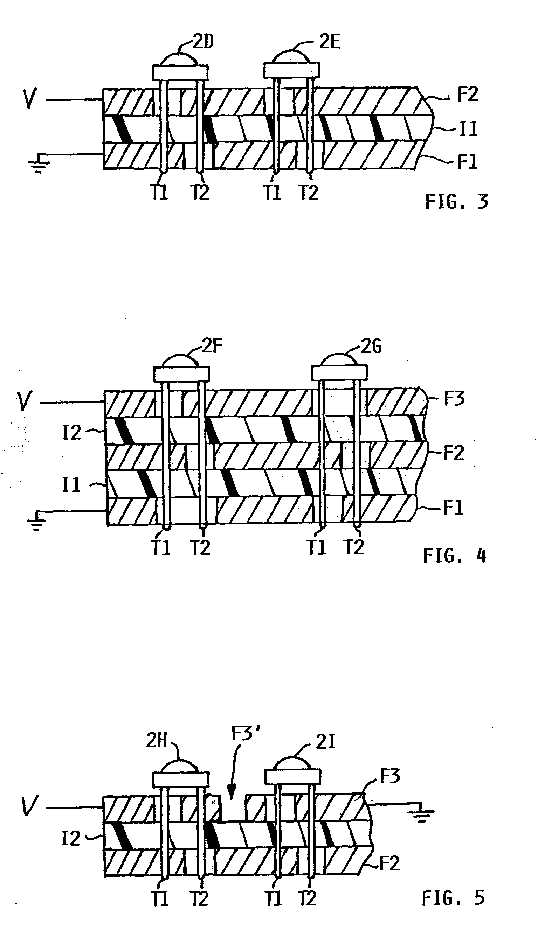

Fig. 3 shows a parallel connection of two light emitting diodes 2D and 2E to each other through two foil layers F1 and F2. Terminal T1 of each of these diodes is connected only to the bottom foil layer F1, while terminal T2 of each of these diodes is connected only to the top foil layer F2. Each terminal is isolated from the other non-connected foil layer by the provision of isolation holes in the manner described above.

On the other hand, Fig. 4 shows a series connection of two light emitting diodes 2F and 2G to each other through three foil layers F1, F2 and F3. For such a series connection, one diode 2F is electrically connected via its terminals T2 and T1 to the top foil layer F3 and the middle foil layer F2, while the other diode 2G is connected via its terminals T1 and T2 to the middle foil layer F2 and the bottom foil layer F1. Furthermore, the top and bottom foil layers F3 and F1 are respectively connected to a power terminal and a ground terminal of the power supply 4 through the switching arrangement 3. In this arrangement, the middle foil layer F2 is not connected to the power supply, but rather serves for the serial interconnection of the two diodes 2F and 2G.

Such a serial connection of two diodes 2H and 21 can alternatively be achieved using foil layers on only two planes, as shown in Fig. 5. This involves providing a gap F3' between two portions or areas of the upper foil layer F3, for example, such that the gap F3' electrically isolates the two portions of the foil layer F3 from each other. The two isolated portions of the foil layer F3 are respectively individually connected to the opposite terminals of the power supply, and each of the diodes 2H and 2I is connected via their two diode terminals T1 and T2 respectively to the two layers F2 and F3.

In a further alternative, a serial connection of plural diodes is achieved with a single layer on a single plane, by appropriately patterning the layer to have plural individual portions or areas that are isolated from each other, e.g. by respective isolating gaps therebetween.

The patterning of the foil layers can be carried out using any conventionally known film or layer patterning techniques, including lithography with various types of etching of the layers, mechanical cutting or stamping of the layers, patterned formation of the layers, for example.

Although the invention has been described with reference to specific example embodiments, it will be appreciated that it is intended to cover all modifications and equivalents within the scope of the appended claims. It should also be understood that the present disclosure includes all possible combinations of any individual features recited in any of the appended claims.

## Claims

1. In an aircraft having an aircraft cabin with a light system including an electrical power source, individual lights in said aircraft cabin, and a conductor arrangement electrically connecting said individual lights to said electrical power source,
an improvement in said light system, wherein:
said individual lights comprise light emitting diodes arranged in said aircraft cabin;
at least some of said light emitting diodes are electrically connected to each other in parallel and/or in series and said light emitting diodes are connected to said electrical power source by said conductor arrangement;
said conductor arrangement comprises a multi-layered arrangement including plural electrically conductive foil layers separated from one another respectively by a respective interposed electrically insulative insulation layer; and
said foil layers form at least one conductive circuit connected to said electrical power source.

2. The improvement in the light system according to claim 1, wherein said light emitting diodes are arranged in or on a ceiling that bounds a top of said aircraft cabin.

3. The improvement in the light system according to claim 1, wherein a first group of said light emitting diodes are electrically connected to each other in parallel by a first conductive circuit among said at least one conductive circuit.

4. The improvement in the light system according to claim 1, wherein a first group of said light emitting diodes are electrically connected to each other in series by a first conductive circuit among said at least one conductive circuit.

5. The improvement in the light system according to claim 1, further comprising a switching arrangement interposed between said electrical power source and said at least one conductive circuit and adapted to selectively electrically connect and disconnect said at least one conductive circuit relative to said electrical power source.

6. The improvement in the light system according to claim 1, wherein said at least one conductive circuit comprises plural independently energizable conductive circuits including a first conductive circuit and a second conductive circuit, and said light emitting diodes comprise a first light emitting diode connected to said first conductive circuit and a second light emitting diode connected to said second conductive circuit.

7. The improvement in the light system according to claim 6, wherein said multi_layered arrangement includes first, second and third said foil layers with a first said insulation layer between said first and second foil layers and a second said insulation layer between said second and third foil layers, and wherein said first and second foil layers form said first conductive circuit and said second and third foil layers form said second conductive circuit.

8. The improvement in the light system according to claim 7, wherein said first light emitting diode has two terminals respectively connected individually to said first and second foil layers, and said second light emitting diode has two terminals respectively connected individually to said second and third foil layers.

9. The improvement in the light system according to claim 7, wherein said light emitting diodes further comprise a third light emitting diode having a terminal connected to said second foil layer and another terminal connected to both said first and third foil layers.

10. The improvement in the light system according to claim 1, wherein said foil layers respectively have different plan shape patterns.

11. The improvement in the light system according to claim 10, wherein said plan shape pattern of one of said foil layers includes a first portion that overlaps or is stacked in registration with a first portion of another of said foil layers, and said plan shape pattern of said one of said foil layers includes a second portion that does not overlap and is not in registration with any portion of said another of said foil layers.

12. The improvement in the light system according to claim 10, wherein said plan shape pattern of one of said foil layers includes two separate foil layer areas separated and electrically isolated from one another by a gap therebetween.

13. The improvement in the light system according to claim 1, further comprising a honeycomb panel, wherein said multi_layered arrangement is arranged and supported on said honeycomb panel.

14. The improvement in the light system according to claim 13, wherein one of said foil layers has a maximum thickness of not more than 3 mm.

15. The improvement in the light system according to claim 13, wherein said multi-layered arrangement has a total maximum thickness of not more than 3 mm.

16. The improvement in the light system according to claim 13, wherein said honeycomb panel and said multi_layered arrangement are curved.

17. The improvement in the light system according to claim 1, wherein said multi-layered arrangement is curved.

18. The improvement in the light system according to claim 1, excluding individual wires connected to said light emitting diodes.
